Europäisches Patentamt

European Patent Office

Office européen des brevets

(19)

(11) Veröffentlichungsnummer: **0 257 031**
**B1**

(12) # EUROPÄISCHE PATENTSCHRIFT

(45) Veröffentlichungstag der Patentschrift:
06.09.89

(51) Int. Cl.⁴: **B 01 D 53/36, B 01 J 21/18**

(21) Anmeldenummer: **86902397.8**

(22) Anmeldetag: **02.04.86**

(86) Internationale Anmeldenummer:
**PCT/EP 86/00204**

(87) Internationale Veröffentlichungsnummer:
**WO 86/05710 (09.10.86 Gazette 86/22)**

(54) **VERWENDUNG VON KATALYSATOREN ZUR STICKOXIDENTFERNUNG AUS ABGASEN.**

(30) Priorität: **03.04.85 DE 3512169**

(43) Veröffentlichungstag der Anmeldung:
**02.03.88 Patentblatt 88/9**

(45) Bekanntmachung des Hinweises auf die Patenterteilung:
**06.09.89 Patentblatt 89/36**

(84) Benannte Vertragsstaaten:
**AT DE GB IT NL SE**

(56) Entgegenhaltungen:
**DE-A- 3 335 499**

**Chemical Abstracts, vol. 82, No. 12, March 1975,
Columbus, Ohio(US), see abstract 76715a**

Die Akte enthält technische Angaben, die nach dem
Eingang der Anmeldung eingereicht wurden und die
nicht in dieser Patentschrift enthalten sind.

(73) Patentinhaber: **Bergwerksverband GmbH,
Franz-Fischer-Weg 61, D-4300 Essen 13 (DE)**

(72) Erfinder: **RICHTER, Ekkehard,
Schmachtenbergstrasse 89, D-4300 Essen 18 (DE)**
Erfinder: **JÜNTGEN, Harald, Bonscheidter Strasse 79,
D-4300 Essen (DE)**
Erfinder: **SCHMIDT, Hans-Jürgen, Heymannplatz 5/6,
D-4300 Essen 1 (DE)**
Erfinder: **KNOBLAUCH, Karl, Semperstrasse 55,
D-4300 Essen 1 (DE)**

## Beschreibung

Die Erfindung betrifft die Verwendung von Katalysatoren zur Stickoxidentfernung aus Abgasen.

In der DE-A-24 33 076 wird die Verwendung von Aktivkohlen und in der DE-A-30 36 531 die Verwendung eines Aktivkokses (Formkokses) als Katalysatoren für die Entfernung von Stickoxiden aus Abgasen beschrieben.

Aktivkokse sind kohlenstoffhaltige Materialien, die durch Mischen von pulverigen, nichtbackenden, fossilen oder rezenten Brennstoffen mit einem Bindemittel, Formen dieser Massen und Schwelen bei Temperaturen zwischen etwa 500° C und 900° C hergestellt werden.

Bei Aktivkohlen erfolgt zusätzlich noch eine Aktivierung, die in Form einer chemischen oder einer Gasaktivierung vorgenommen werden kann. Da bei der Aktivierung Kohlenstoff abgebaut wird, tritt bei diesem Vorgang ein erheblicher Substanzverlust ein. Bedingt durch das Herstellungsverfahren sind der Aktivkoks/die Aktivkohle im Vergleich zu anderen kohlenstoffhaltigen Materialien relativ teuer.

Bei katalytischen Vorgängen geht der Fachmann davon aus, dass die katalytische Aktivität mit steigender innerer Oberfläche zunimmt.

Es wurde überraschend gefunden, dass auch solche kohlenstoffhaltige Materialien die Stickoxidreduktion mit Ammoniak katalysieren, die im Vergleich zu Aktivkohle/Aktivkoks kleinere innere Oberflächen aufweisen und wesentlich billiger als diese sind.

In Versuchen hat sich gezeigt, dass natürliche Kohlen, Schwelprodukte aus Holz, Torf, Braunkohle und Steinkohle sowie Verkokungsprodukte der Hochtemperaturverkokung von Holz, Torf, Braunkohle und Steinkohle die Reduktion der Stickoxide mit Ammoniak im Temperaturbereich zwischen 50° C und 180° C, vorzugsweise zwischen 70° C und 150° C, katalysieren.

Gegenstand der Erfindung ist demgemäss die Verwendung von natürlichen Kohlen, von Schwelprodukten aus Holz, Torf, Braunkohle und Steinkohle sowie Verkokungsprodukten der Hochtemperaturverkokung von Holz, Torf, Braunkohle und Steinkohle als Katalysatoren für die Umsetzung von Stickoxiden mit Ammoniak im Temperaturbereich zwischen 50° C und 180° C, vorzugsweise zwischen 70° C und 150° C.

Dabei kann die katalytische Aktivität durch die Zugabe von Salzen, insbesondere Carbonaten oder Sulfaten der Alkali- und Erdalkalimetalle, vorzugsweise von Natrium, Kalium, und Calcium, erhöht werden. Diese anorganischen Verbindungen können mit dem kohlenstoffhaltigen Material trocken vermischt oder in Lösung oder Suspension mittels Imprägnierung aufgebracht werden.

Die erfindungsgemäss verwendeten Katalysatoren sind, obwohl sie nur eine geringe innere Oberfläche haben, für Verfahren zur Abgasreinigung geeignet, in denen Stickoxide als Schadstoff enthalten sind und abgeschieden werden sollen. Wegen ihres geringen Preises können sie hervorragend dazu beitragen, die derzeit besonders dringlichen Umweltprobleme auf diesem Gebiet kostengünstig zu lösen. In zahlreichen Abgasen sind neben Stickoxiden auch Schwefeloxide enthalten.

Schwefeloxide werden bekanntlich durch Adsorption an Aktivkoks/Aktivkohle, die grosse innere Oberflächen haben, gebunden und aus den Abgasen abgeschieden. Die $SO_2$-Abscheidung führt dabei jedoch zur Bildung von $H_2SO_4$ im Porensystem der Aktivkohle/des Aktivkokses. Bei Anwesenheit von $NH_3$ bilden sich ausserdem Ammoniumsalze der Schwefelsäure. Schwefelsäure- und Ammoniumsulfatbildung beeinträchtigen die Wirksamkeit dieser Katalysatoren und erfordern aufwendige Regenerationsmassnahmen.

Die erfindungsgemäss eingesetzten Katalysatoren sind wegen ihrer geringen inneren Oberfläche somit auch für alle Verfahren zur Abgasreinigung besonders geeignet, in denen $SO_2$ enthalten ist, aber insbesondere die Stickoxide abgeschieden werden sollen. Da wegen der geringen inneren Oberfläche keine nennenswerte Schwefelsäurebzw. Ammoniumsulfatbildung erfolgt, brauchen diese Katalysatoren nicht oder nur in grossen Zeitabständen regeneriert bzw. ausgewechselt zu werden. Sie können somit auch vorteilhaft vor oder hinter Entschwefelungsanlagen eingesetzt werden.

Bei erfindungsgemässen Einsatz der Katalysatoren kann bei diesen Anwendungsfällen ausserdem mit geringeren Ammoniakkonzentrationen gearbeitet werden, da kaum Ammoniak für die Ammoniumsulfatbildung verbraucht wird. Ein weiterer wichtiger Vorteil ist, dass bei diesen billigen Katalysatoren auf eine Regeneration ganz verzichtet werden kann.

Ergebnisse von Versuchen mit erfindungsgemäss eingesetzten Katalysatoren sind aus den nachfolgenden Beispielen entnehmbar:

In einem Rohrreaktor mit einem inneren Durchmesser von 50 mm werden verschiedene Katalysatoren von einem Gasgemisch durchströmt, das sich folgendermassen zusammensetzt:

| | |
|---|---|
| Stickstoffmonoxid: | 720 vpm |
| Sauerstoff: | 6,4 Vol.-% |
| Wasserdampf: | 9,8 Vol.-% |
| Stickstoff: | Rest |

Dem Gasgemisch wird vor dem Katalysatorbett eine solche Menge Ammoniak zugemischt, dass sich eine Ammoniakkonzentration von 480 vpm einstellt. Bei allen Versuchen wird Katalysatormaterial entsprechend einer Betthöhe von 200 mm eingefüllt. Der Reaktor wird von einem Gasstrom von 1,5 m³/h (i. N.) durchströmt. Es werden folgende Katalysatoren (Tabelle 1) eingesetzt, von denen die unter den Ziffern 1 bis 9 genannten solche gemäss der Erfindung und der unter Ziffer 10 genannte ein Aktivkoks gemäss dem Stand der Technik ist:

*(Tabelle auf der nächsten Seite)*

Die Versuchsergebnisse sind in den Tabellen 2 und 3 wiedergegeben. (Konzentration an NO: $c_{NO}$, Konzentration an $NH_3$: $c_{NH_3}$)

*Tabelle 1*

| Katalysator-Nr. | Material |
|---|---|
| 1 | Hüttenkoks, Kornfraktion 2-4 mm |
| 2 | Braunkohlenkoks, Kornfraktion 2-8 mm |
| 3 | Anthrazit, ca. 6,5% Flüchtige |
| 4 | Anthrazit, kleiner 1,5% Flüchtige, geschwelt unter Inertgas über 3 Stunden über 900° C, Kornfraktion 2-8 mm |
| 5 | Holzkohle, Kornfraktion 2-10 mm |
| 6 | Steinkohle, ca. 27% Flüchtige, Kornfraktion 2-10 mm |
| 7 | Hüttenkoks, getränkt in 0,1 m $CaSO_4$-Lsg. und bei 120° C getrocknet |
| 8 | Hüttenkoks, getränkt in 0,25 m $K_2SO_4$ und bei 120° C getrocknet |
| 9 | Anthrazit, getränkt in 0,5 m $Na_2SO_4$-Lösung und bei 120° C getrocknet |
| 10 | Aktivkoks 4 mm |

| Katalysator-Nr. | $C_{NO}$, aus (vpm) | $C_{NH_3}$, aus (vpm) | Temp. (°C) | $U_{NO}$ (%) |
|---|---|---|---|---|
| 2 | 450 | 300 | 120 | 37,5 |
|   | 510 | 335 | 70 | 29,2 |
| 3 | 440 | 305 | 150 | 38,9 |
|   | 470 | 325 | 120 | 34,7 |
|   | 490 | 340 | 90 | 31,9 |
| 4 | 450 | 295 | 120 | 37,5 |
| 5 | 465 | 315 | 118 | 35,4 |
| 6 | 540 | 355 | 118 | 25,0 |
| 7 | 510 | 310 | 87 | 29,2 |
| 8 | 515 | 320 | 105 | 28,5 |
| 9 | 460 | 305 | 110 | 36,1 |
| 10 | 460 | 300 | 120 | 36,1 |

*Beispiel zur Stickoxidabscheidung (Tabelle 2)*

Die Beispiele belegen, dass bei erfindungsgemässem Einsatz der Katalysatoren vergleichbare Umsätze an NO ($U_{NO}$) wie bei Aktivkoks (Katalysator 10) erzielt werden können.

Ein Vergleich des Umsatzes an NO bei Katalysator 1 (Hüttenkoks, 90° C) mit dem des Katalysators 7 (Hüttenkoks getränkt in 0,25 m $CaSO_4$-Lsg., 87° C) zeigt, dass sich der Umsatz von 25,7% auf 29,2% aufgrund der Steigerung der katalytischen Aktivität durch Imprägnierung erhöht.

Dem Fachmann ist bekannt, dass sich bei Erhöhung der Schütthöhe höhere NO-Umsatzgrade erzielen lassen, also auch Umsatzgrade bis über 90% mit Restgehalten von Ammoniak im Abgas, die unter den vorgeschriebenen Grenzwerten bleiben.

*Beispiele zur Stickoxidabscheidung in Gegenwart von $SO_2$ (Tabelle 3)*

In einem Rohrreaktor mit einem inneren Durchmesser von 50 mm werden die in Tabelle 3 aufgelisteten Katalysatoren von einem Gasgemisch durchströmt, das sich folgendermassen zusammensetzt:

| | |
|---|---|
| Schwefeldioxid: | 150 vpm |
| Stickstoffmonoxid: | 720 vpm |
| Sauerstoff: | 6,4 Vol.-% |
| Wasserdampf: | 9,8 Vol.-% |
| Stickstoff: | Rest |

Dem Gasgemisch wird vor dem Katalysatorbett eine solche Menge Ammoniak zugemischt, dass sich eine Ammoniakkonzentration von 480 vpm einstellt. Bei allen Versuchen wird Katalysatormaterial entsprechend einer Betthöhe von 200 mm eingefüllt. Der Reaktor wird von einem Gasstrom von 1,5 m³/h (i. N.) durchströmt. Die Angaben in Tabelle 3 beziehen sich auf den Zustand des Reaktors nach 5 h Betriebsdauer bei der angegebenen Temperatur.

Ein Vergleich der $C_{NH_3}$, aus-Werte sowie $U_{NO}$-Werte in Tabelle 3 mit den vergleichbaren Werten der entsprechenden Katalysatoren der Tabelle 2 zeigt, dass durch die Anwesenheit von $SO_2$ der $NO_x$-Umsatz sinkt und der $NH_3$-Verbrauch aufgrund der Ammoniumsulfatbildung steigt (der $C_{NH_3}$, aus-Wert ist niedriger).

*Tabelle 2*

| Katalysator-Nr. | $C_{NO}$, aus (vpm) | $C_{NH_3}$, aus (vpm) | Temp. (°C) | $U_{NO}$ (%) |
|---|---|---|---|---|
| 1 | 500 | 315 | 120 | 30,5 |
|   | 535 | 335 | 90 | 25,7 |

*Tabelle 3*

| Katalysator-Nr. | $C_{NO}$, aus (vpm) | $C_{SO_2}$, aus (vpm) | $C_{NH_3}$, ein (vpm) | $C_{NH_3}$, aus (vpm) | Temp. (°C) | $U_{NO}$ (%) |
|---|---|---|---|---|---|---|
| 1 | 520 | 135 | 480 | 300 | 120 | 27,7 |
|   | 550 | 125 | 480 | 305 | 90 | 23,6 |
| 3 | 490 | 140 | 480 | 320 | 120 | 32,1 |
| 10 | 535 | 20 | 480 | 200 | 120 | 25,7 |
|   | 470 | 10 | 680 | 320 | 120 | 34,6 |

Diese Differenz ist bei dem Katalysator 10 (Aktivkoks) wesentlich höher. Der $NO_x$-Umsatz sinkt um mehr als 10% absolut und der $NH_3$-Verbrauch ist um 100 vpm grösser. Wollte man bei Einsatz von Aktivkoks einen Umsatz in der gleichen Grössenordnung wie in Tabelle 2 erreichen, so müsste die Ammoniakeingangskonzentration um 200 vpm auf 680 vpm erhöht werden (letzte Zeile in Tabelle 3). Das Beispiel belegt somit, dass bei erfindungsgemässen Einsatz der Katalysatoren mit geringeren Ammoniakkonzentrationen gearbeitet werden kann.

## Patentanspruch

Verwendung von natürlichen Kohlen, von Schwelprodukten aus Holz, Torf, Braunkohle und Steinkohle sowie Verkokungsprodukten der Hochtemperaturverkokung von Holz, Torf, Braunkohle und Steinkohle als Katalysatoren für die Umsetzung von Stickoxiden mit Ammoniak im Temperaturbereich zwischen 50° C und 180° C, vorzugsweise zwsichen 70° C und 150° C.

## Claim

Use of natural carbons, of low-temperature carbonisation products made from wood, peat, brown coal, and mineral coal, and also coking products of the high-temperature coking of wood, peat, brown coal, and mineral coal, as catalysts for the reaction of nitrogen oxides with ammonia, in the temperature range between 50° C and 180° C, preferably between 70° C and 150° C.

## Revendication

Utilisation de charbons naturels, de produits carbonisés à basse température, de bois, tourbe, lignite et houille ainsi que de produits cokéfiés à haute température, de bois, tourbe, lignite et houille comme catalyseurs pour la transformation de $NO_x$ avec $NH_3$ à une température entre 50 et 180° C, de préférence entre 70 et 150° C.